# EUROPÄISCHE PATENTSCHRIFT

(11) **EP 3 078 492 B1**
(45) Veröffentlichungstag und Bekanntmachung des Hinweises auf die Patenterteilung: **09.10.2019**
(21) Anmeldenummer: 16163090.0
(22) Anmeldetag: 31.03.2016
(51) Int. Cl.: B32B 38/08, B32B 27/12, B29C 70/06, B32B 5/02, B32B 7/04, B32B 27/08, B32B 37/18, B32B 1/00, B32B 3/10

(54) **TIEFZIEHFÄHIGE FOLIE UND VERFAHREN ZUR HERSTELLUNG EINER TIEFZIEHFÄHIGEN FOLIE**
DEEP-DRAWABLE FILM AND METHOD FOR PRODUCING A DEEP-DRAWABLE FILM
FILM EMBOUTISSABLE ET PROCEDE DE FABRICATION D'UN FILM EMBOUTISSABLE

(30) Priorität: 10.04.2015 DE 102015004708
(43) Veröffentlichungstag der Anmeldung: 12.10.2016
(73) Patentinhaber: Universität Kassel, 34125 Kassel (DE)
(72) Erfinder: Feldmann, Maik, 34277 Fuldabrück (DE); Jarka, Stefan, 34212 Melsungen (DE); Heim, Hans-Peter, 33332 Gütersloh (DE)
(74) Vertreter: Patentanwälte Walther Hinz Bayer PartGmbB

(56) Entgegenhaltungen:
- EP-A1- 1 787 790
- EP-A1- 1 787 803
- DE-A1- 2 127 167
- DE-A1- 10 237 803
- HINE P.J. ET AL: "The use of interleaved films for optimising the production and properties of hot compacted, self reinforced polymer composites", COMPOSITES SCIENCE AND TECHNOLOGY, ELSEVIER, UK, Bd. 68, Nr. 6, 17. November 2007 (2007-11-17), Seiten 1413-1421, XP022527258, ISSN: 0266-3538
- ANDRZEJ K BLEDZKI ET AL: "Functional graded self-reinforced polypropylene sheets", POLIMERY, Bd. 56, Nr. 5, Januar 2011 (2011-01), Seiten 369-374, XP055188471,

## Beschreibung

Die Erfindung betrifft einerseits eine tiefziehfähige Folie und andererseits ein Verfahren zur Herstellung einer tiefziehfähigen Folie.

Tiefziehfähige Folien sind bekannt. Eine solche Folie ist relativ dünn, wobei zur Formgebung einer solchen tiefziehfähigen Folie diese mit Unter- oder Überdruck in eine entsprechende Form eingezogen bzw. eingedrückt wird. Damit ein solcher Gasdruck als Unter- oder Überdruck auf die Folie wirken kann, ist erforderlich, dass die Folie absolut dicht ist. Aufgrund der Formgebung weist eine solche Folie eine gewisse Eigenstabilität auf, die allerdings nicht sehr hoch ist. Verwendung finden solche Tiefziehfolien nach der Formgebung beispielsweise als Pralinentrays, die bekanntlich zur Stabilisierung in einer Schachtel gelagert sind. Das heißt, eine solche zur Formgebung tiefgezogene Folie weist nur eine geringe Eigenstabilität auf, Darüber hinaus sind sogenannte mehrschichtige Biegesteifeplatten aus mehreren Gewebelagen bekannt, die zur Formgebung heiß verpresst werden. Hierbei wird eine solche mehrschichtige Gewebelage in eine Negativform gelegt und durch einen Stempel in die Negativform zur Formgebung hineingepresst. Derartig hergestellte Folienformen weisen eine erhebliche Eigenstabilität auf, haben jedoch den Nachteil, dass sie wesentlich dicker und damit schwerer sind, als aus Tiefziehfolien hergestellte Körper.

In diesem Zusammenhang ist aus der DE 10 2006 014 313 A1 ein Verfahren zur Herstellung eines Formteils bekannt, das ein aus mehreren Schichten bestehendes Verbundmaterial, sowie ein damit in Verbindung stehendes thermoplastisches Kunststoffmaterial aufweist. Die Verbindung des Verbundmaterials mit dem thermoplastischen Kunststoffmaterial erfolgt dadurch, dass das thermoplastische Kunststoffmaterial unter Druck verformt wird, sodass es fließfähig wird und dabei mit dem Verbundmaterial einen Verbund eingeht.

Die EP 1 787 803 A1 und die DE 21 27 167 A1 offenbaren jeweils eine tiefziehfähige Folie gemäß dem Oberbegriff der Ansprüche 1 und 2.

Die der Erfindung zugrunde liegende Aufgabe besteht nunmehr darin, eine tiefziehfähige Folie bereitzustellen, die nach der Formgebung eine Stabilität aufweist, die ähnlich der eines Körpers ist, der im Wege des Heißverpressens hergestellt ist.

Zur Lösung der Aufgabe wird erfindungsgemäß eine tiefziehfähige Folie gemäß den Merkmalen des unabhängigen Anspruchs 1 bzw. des unabhängigen Anspruchs 2 sowie ein Verfahren zur Herstellung einer tiefziehfähigen Folie gemäß den Merkmalen des unabhängigen Anspruchs 9 vorgeschlagen. Die tiefziehfähige Folie umfasst eine einzige Festigkeitsträgerschicht mit aus Kunststoff hergestellten gereckten Bändchen, wobei die Festigkeitsträgerschicht zumindest einseitig mit einer Kunststoffschicht beschichtet ist, wobei die Kunststoffschicht mit der Festigkeitsträgerschicht stoffschlüssig verbunden ist. Der der Erfindung zugrunde liegende Gedanke besteht also darin, aus gereckten Bändchen ein Gewebe, Gewirk oder Vlies herzustellen, diese Festigkeitsträgerschicht zumindest einseitig zur Herstellung einer gasdichten Folie mit einem Kunststoff zu beschichten, wobei die Kunststoffschicht mit dem Festigkeitsträger stoffschlüssig verbunden ist. Eine solche Folie ist aufgrund ihrer geringen Stärke tiefziehfähig, dass heißt, es ist mit geringem Materialaufwand im Wege des Tiefziehens ein Körper mit relativ hoher Steifigkeit oder Festigkeit herstellbar. Bedingt ist dies im Wesentlichen dadurch, dass gereckte Bändchen als Festigkeitsträgerschicht zum Einsatz gelangen, wobei gereckte Bändchen aus Kunststoff solche sind, deren Moleküle hoch orientiert sind.

Vorteilhafte Merkmale und Ausgestaltungen der Erfindung ergeben sich aus den Unteransprüchen.

So ist insbesondere vorgesehen, dass die Bändchen der Festigkeitsträgerschicht einschichtig hergestellt oder ausgebildet sind. Zur Verbindung solcher Bändchen der Festigkeitsträgerschicht mit der Kunststoffschicht im Wege des Stoffschlusses ist eine Erwärmung vorgesehen, wobei die Erwärmung der Bändchen und/oder der Kunststoffschicht derart ist, dass die einschichtig hergestellten Bändchen lediglich im äußeren Randbereich anschmelzen. Dies deshalb, um die höhere Festigkeit aufgrund des Reckens der Bändchen beibehalten zu können.

Nach einer anderen Variante ist vorgesehen, dass die Bändchen der Festigkeitsträgerschicht mehrschichtig, insbesondere zweischichtig, ausgebildet sind. Hierbei ist zumindest die innere Schicht der Bändchen gereckt. Vorteilhaft weist hierbei das Material der inneren Schicht der Bändchen einen höheren Schmelzpunkt auf, als die mindestens eine äußere Schicht des Bändchens, dass heißt, die Ummantelung der gereckten inneren Schicht des Bändchens. Auch hierbei ist vorgesehen, dass die äußere Schicht eines thermoplastischen Bändchens, dass heißt die Ummantelung der Bändchen der Festigkeitsträgerschicht, die als Bändchengewebe, Bändchengestrick oder Bändchenvlies ausgebildet sein kann, lediglich im äußeren Randbereich anschmilzt, um eine stoffschlüssige Verbindung mit der Kunststoffschicht einzugehen. Durch die Beschichtung mit der thermoplastischen Kunststoffschicht wird erreicht, dass die Festigkeitsträgerschicht, also das Bändchengewebe, Bändchengestrick oder Bändchenvlies, gasdicht wird.

Gemäß der Erfindung ist vorgesehen, dass die Kunststoffschicht und/oder die die Festigkeitsträgerschicht bildenden Bändchen mindestens ein Additiv aufweisen, durch das bei strahlungsinduzierter Erwärmung eine Strahlungsquelle die Bändchen und/oder die Kunststoffschicht auf unterschiedliche Temperaturen aufheizbar sind. Hierbei kann z. B. das mindestens eine Additiv als Absorber, mit z. B. Ruß- oder Farbpartikeln, ausgebildet sein. Alternativ weist erfindungsgemäß die aus Bändchen ausgebildete Festigkeitsträgerschicht eine reflektierende Beschichtung auf. Das heißt, durch die Zugabe von Farb- oder Füllstoffen wie Ruß als Additive in die Kunststoffschicht wird eine unterschiedliche Erwärmung der Kunststoffschicht relativ zur Festigkeitsträgerschicht ermöglicht. Hierbei können die entsprechenden Additive an die Wellenlänge der Strahlungsquelle angepasst sein. Insbesondere die Festigkeitsträgerschicht kann eine Beschichtung aufweisen, und zwar insbesondere eine reflektierende Beschichtung, um zu verhindern, dass die Festigkeitsträgerschicht so weit aufgeheizt wird, dass die mechanischen Eigenschaften der höheren Festigkeit durch den Reckvorgang aufgehoben werden.

Wenn demzufolge das Kunststoffmaterial der Kunststoffschicht bei geringeren bzw. auch bei wesentlich geringeren Temperaturen schmilzt oder erweicht, als dies bei dem Kunststoff der Bändchen der Festigkeitsträgerschicht der Fall ist, wird mit einem strahlungsabsorbierenden Additiv in der Festigkeitsträgerschicht erreicht, dass dennoch die Oberfläche der Bändchen der Festigkeitsträgerschicht anschmelzen kann, um eine stoffschlüssige Verbindung zwischen der Kunststoffschicht einerseits und der Festigkeitsträgerschicht andererseits bereitstellen zu können.

Ist hingegen die Schmelztemperatur des Kunststoffmaterials der Kunststoffschicht höher als die des Kunststoffmaterials der Bändchen der Festigkeitsträgerschicht, dann ist vorzugsweise die Zugabe eines strahlungsabsorbierenden Additivs in den Kunststoff der Kunststoffschicht vorgesehen. Das heißt, dass die Kunststoffschicht dann auf höhere Temperaturen aufheizt, als die Festigkeitsträgerschicht.

Liegt hingegen die Schmelztemperatur des Kunststoffes der Kunststoffschicht in einem Temperaturbereich, der ein Aufschmelzen der Bändchen der Festigkeitsträgerschicht erwarten lässt, dann sorgt eine reflektierende Beschichtung der Oberfläche der Bändchen der Festigkeitsträgerschicht dafür, dass die Bändchen nicht eine Temperatur erreichen, bei der die mechanische Eigenschaft der höheren Festigkeit durch den Reckvorgang aufgehoben wird.

Das Verfahren zur Herstellung einer tiefziehfähigen Folie, wobei die Bändchen aus Kunststoff und hier insbesondere einem thermoplastischen Kunststoff gereckt sind, zeichnet sich dadurch aus, dass die gereckten Bändchen zu einem Gewebe, Gewirk oder Vlies als Festigkeitsträgerschicht verbunden werden, wobei auf die Festigkeitsträgerschicht zumindest einseitig eine Kunststoffschicht aus thermoplastischem Material aufgebracht wird, wobei zum Zwecke der formschlüssigen Verbindung zwischen der Kunststoffschicht und der Festigkeitsträgerschicht die Kunststoffschicht und/oder der Festigkeitsträger erwärmt werden, wobei die Temperatur derart gewählt ist, dass die Bändchen der Festigkeitsträgerschicht lediglich auf ihrer Oberfläche angeschmolzen werden. Das heißt, der Gedanke der Erfindung besteht darin, eine gasdichte Folie, die tiefziehfähig ist, dadurch herzustellen, dass die Kunststoffschicht, die die Dichtigkeit der Festigkeitsträger bewerkstelligen soll, im Wege des Stoffschlusses durch Schmelzen mit der Festigkeitsträgerschicht verbunden wird. Die Bändchen sind hierbei ein oder mehrschichtig hergestellt, wobei die gereckten Bändchen, wenn sie einschichtig hergestellt sind, lediglich auf ihrer Oberfläche angeschmolzen werden, um die mechanische Eigenschaft der höheren Festigkeit durch den Reckvorgang nicht aufzuheben. Bei mehrschichtig, insbesondere zweischichtig, hergestellten Bändchen ist insofern ebenfalls vorgesehen, dass lediglich die äußere Schicht des Bändchens angeschmolzen wird, nicht aber die innere Schicht, die die durch den Reckvorgang erhaltene höhere Festigkeit beibehalten soll. Hieraus wird deutlich, dass die äußere Schicht der Bändchen der Festigkeitsträgerschicht einen Schmelzpunkt aufweist, der ähnlich oder gleich der Kunststoffschicht ist. Für eine stoffschlüssige Verbindung sollten auch die Materialien von Kunststoffschicht und Bändchen gleich oder im Sinne der Erzielung einer stoffschlüssigen Verbindung durch Verschmelzen kompatibel sein.

Gegenstand der Erfindung ist ebenfalls ein im Tiefziehverfahren hergestelltes Formteil gekennzeichnet durch eine tiefziehfähige Folie gemäß mindestens einem oder mehreren der Ansprüche 1 bis 8.

In diesem Zusammenhang kann nach einem besonders vorteilhaften Merkmal vorgesehen sein, die Festigkeitsträgerschicht lokal an den Stellen der größten Beanspruchung im Formteil anzuordnen. Es wurde bereits darauf hingewiesen, dass lediglich eine einzige Festigkeitsträgerschicht vorgesehen ist, also nicht mehrere, übereinander angeordnete Festigkeitsträgerschichten. Diese Festigkeitsträgerschicht muss sich allerdings nicht notwendigerweise über die gesamte Fläche des Formteils erstrecken, vielmehr kann vorgesehen sein, die mindestens eine Festigkeitsträgerschicht nur lokal an den Stellen der größten Beanspruchung des Formteils anzuordnen.

Anhand der Zeichnungen wird die Erfindung nachstehend beispielhaft näher erläutert.
- Fig. 1: zeigt schematisch vergrößert ein Gewebe aus Bändchen;
- Fig. 2: zeigt vergrößert einen Schnitt durch ein einschichtiges Bändchen;
- Fig. 3: zeigt vergrößert einen Schnitt durch ein zweischichtiges Bändchen.

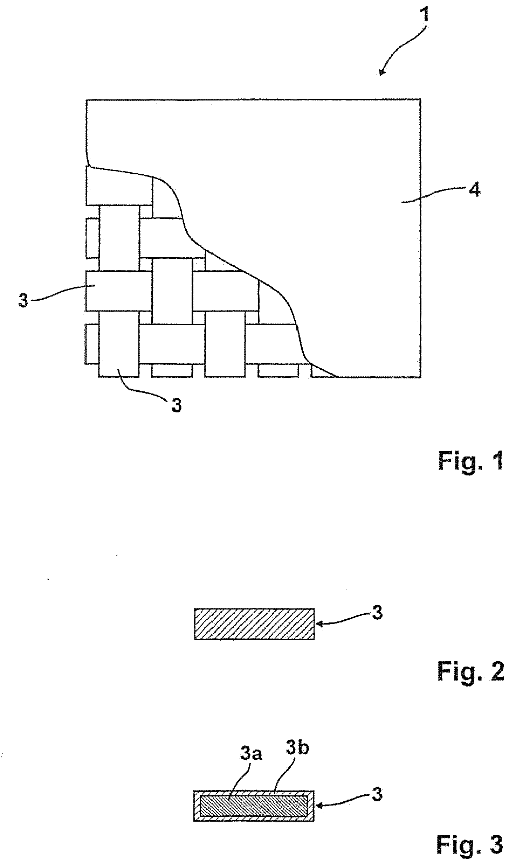

Das in Fig. 1 dargestellte Bändchengewebe 1 umfasst in Schuss- und Kettrichtung mehrere Bändchen 3. Das Gewebe 1 ist mit einer Kunststoffschicht 4 versehen, die für die Dichtigkeit des Gewebes 1 insgesamt sorgt. Die Kunststoffschicht 4, mit der das Gewebe 1 ummantelt ist, ist aus einem ähnlichen Kunststoff wie die Bändchen des Gewebes, sodass eine stoffschlüssige Verbindung durch Verschmelzen möglich ist. Beispielsweise bestehen sowohl die Kunststoffschicht als auch die Bändchen aus einem Polypropylen, was die Recycelbarkeit erleichtert bzw. ermöglicht.

Fig. 2 zeigt einen Schnitt durch ein Bändchen 3, das einschichtig ausgebildet ist.

Fig. 3 zeigt einen Schnitt durch ein zweischichtiges Bändchen 3, wobei die innere Schicht 3a von einer äußeren Schicht 3b im Sinne einer Ummantelung umgeben ist. Hierbei ist zumindest die Schicht 3a des zweischichtigen Bändchens gereckt, weist also eine erhöhte Festigkeit auf. Mit von der Erfindung erfasst ist allerdings auch eine Ausführungsform, bei der das Bändchen 3 als zweischichtiges Bändchen insgesamt gereckt ist.

Sowohl bei dem einschichtigen Bändchen als auch bei dem zweischichtigen Bändchen ist zur Verbindung mit der Kunststoffschicht eine stoffschlüssige Verbindung vorgesehen, die dadurch bewirkt wird, dass die Bändchen und die Kunststoffschicht aus einem ähnlichen Thermoplasten, beispielsweise aus Polypropylen, hergestellt sind, wobei zur Herstellung der stoffschlüssigen Verbindung zumindest das Bändchen im äußeren Bereich angeschmolzen wird. Bei einem einschichtigen Bändchen ist hierbei darauf zu achten, dass tatsächlich die Erwärmung nur im Außenbereich erfolgt, und nicht etwa das ganze Bändchen durchgängig erwärmt wird, da dann die durch das Recken bewirkten Festigkeitssteigerungen nicht erhalten blieben. Bei dem in Fig. 3 dargestellten zweischichtigen Bändchen muss zumindest die innere Schicht von der Erwärmung ausgenommen werden, um die durch den Reckvorgang bewirkte Festigkeitssteigerung beizubehalten.

### Bezugszeichenliste:

- 1: Bändchengewebe
- 3: Bändchen
- 3a: innere Schicht
- 3b: äußere Schicht
- 4: Kunststoffschicht

## Patentansprüche

1. Tiefziehfähige Folie, umfassend eine einzige Festigkeitsträgerschicht mit aus Kunststoff hergestellten gereckten Bändchen (3), wobei die Festigkeitsträgerschicht zumindest einseitig mit einer Kunststoffschicht (4) beschichtet ist, wobei die Kunststoffschicht (4) mit der Festigkeitsträgerschicht stoffschlüssig verbunden ist,
**dadurch gekennzeichnet,**
**dass** die Kunststoffschicht und/oder die Bändchen der Festigkeitsträgerschicht mindestens ein Additiv aufweisen, durch das bei strahlungsinduzierter Erwärmung durch eine Strahlungsquelle die Bändchen und/oder die Kunststoffschicht auf unterschiedliche Temperaturen aufheizbar sind.

2. Tiefziehfähige Folie, umfassend eine einzige Festigkeitsträgerschicht mit aus Kunststoff hergestellten gereckten Bändchen (3), wobei die Festigkeitsträgerschicht zumindest einseitig mit einer Kunststoffschicht (4) beschichtet ist, wobei die Kunststoffschicht (4) mit der Festigkeitsträgerschicht stoffschlüssig verbunden ist,
**dadurch gekennzeichnet,**
**dass** die aus Bändchen ausgebildete Festigkeitsträgerschicht eine reflektierende Beschichtung aufweist.

3. Tiefziehfähige Folie nach Anspruch 1 oder 2,
**dadurch gekennzeichnet,**
**dass** die Bändchen (3) der Festigkeitsträgerschicht mehrschichtig, insbesondere zweischichtig ausgebildet sind.

4. Tiefziehfähige Folie nach Anspruch 3,
**dadurch gekennzeichnet,**
**dass** zumindest die innere Schicht (3a) des mehrschichtig aufgebauten Bändchens (3) gereckt ist.

5. Tiefziehfähige Folie nach Anspruch 3 oder 4,
**dadurch gekennzeichnet,**
**dass** das Material der inneren Schicht (3a) der Bändchen (3) einen höheren Schmelzpunkt aufweist, als die mindestens eine äußere Schicht (3b).

6. Tiefziehfähige Folie nach einem oder mehreren der voranstehenden Ansprüche,
**dadurch gekennzeichnet,**
**dass** die Festigkeitsträgerschicht als Bändchengewebe (1), Bändchengewirk oder Bändchenvlies ausgebildet ist.

7. Tiefziehfähige Folie nach einem oder mehreren der voranstehenden Ansprüche,
**dadurch gekennzeichnet,**
**dass** die Bändchen (3) und/oder die Kunststoffschicht (4) aus einem thermoplastischen Kunststoff ausgebildet sind.

8. Tiefziehfähige Folie nach Anspruch 1 oder 3 bis 7,
**dadurch gekennzeichnet,**
**dass** das mindestens eine Additiv als Absorber, z. B. Ruß, Farbpartikel, ausgebildet ist.

9. Verfahren zur Herstellung einer tiefziehfähigen Folie, wobei Bändchen (3) aus Kunststoff gereckt sind, die gereckten Bändchen (3) zu einem Gewebe, Gewirk oder Vlies als Festigkeitsträgerschicht verbunden werden, auf die Festigkeitsträgerschicht zumindest einseitig eine Kunststoffschicht (4) aufgebracht wird, wobei zum Zwecke der stoffschlüssigen Verbindung zwischen der Kunststoffschicht (4) und der Festigkeitsträgerschicht die Kunststoffschicht (4) und/oder die Festigkeitsträgerschicht erwärmt werden, wobei die Temperatur derart gewählt ist, dass die Bändchen (3) der Festigkeitsträgerschicht lediglich auf ihrer Oberfläche angeschmolzen werden, wobei die Kunststoffschicht und/oder die Bändchen der Festigkeitsträgerschicht mindestens ein Additiv aufweisen, durch das bei strahlungsinduzierter Erwärmung durch eine Strahlungsquelle die Bändchen und/oder die Kunststoffschicht auf unterschiedliche Temperaturen aufheizbar sind.

10. Verfahren nach Anspruch 9,
**dadurch gekennzeichnet,**
**dass** die Bändchen (3) ein- oder mehrschichtig hergestellt sind.

11. Verfahren nach Anspruch 10,
**dadurch gekennzeichnet,**
**dass** die äußere Schicht (3b) der Bändchen (3) der Festigkeitsträgerschicht einen Schmelzpunkt aufweist, der ähnlich oder gleich der der Kunststoffschicht (4) ist.

12. Verfahren nach Anspruch 10 oder 11,
**dadurch gekennzeichnet,**
**dass** bei einem mehrschichtigen Bändchen (3) zumindest die innere Schicht (3a) gereckt ist.

13. Im Tiefziehverfahren hergestelltes Formteil,
**gekennzeichnet durch**
eine tiefziehfähige Folie gemäß einem oder mehreren der Ansprüche 1 bis8.

14. Formteil nach Anspruch 13,
**dadurch gekennzeichnet,**
**dass** die Festigkeitsträgerschicht lokal an den Stellen der größten Beanspruchung im Formteil angeordnet ist.

## Claims

1. A deep-drawable foil comprising a single reinforcement layer with stretched strips (3) made of a synthetic material, wherein the reinforcement layer is coated at least on one side with a synthetic material layer (4), wherein the synthetic material layer (4) is integrally bonded with the reinforcement layer,
**characterized in that**
the synthetic material layer and/or the strips of the reinforcement layer comprise at least one additive by way of which the strips and/or the synthetic material layer can be heated up to different temperatures when subjected to a radiation-induced heating by a radiation source.

2. A deep-drawable foil, comprising a single reinforcement layer with stretched strips (3) made of a synthetic material, wherein the reinforcement layer is coated at least on one side with a synthetic material layer (4), wherein the synthetic material layer (4) is integrally bonded with the reinforcement layer,
**characterized in that**
the reinforcement layer formed by strips comprises a reflective coating.

3. The deep-drawable foil according to claim 1 or 2,
**characterized in that**
the strips (3) of the reinforcement layer are formed in several layers, in particular two layers.

4. The deep-drawable foil according to claim 3,
**characterized in that**
at least the inner layer (3a) of the multi-layered strip (3) is stretched.

5. The deep-drawable foil according to claim 3 or 4,
**characterized in that**
the material of the inner layer (3a) of the strips (3) has a higher melting point than the at least one outer layer (3b).

6. The deep-drawable foil according to one or several of the preceding claims,
**characterized in that**
the reinforcement layer is formed as a woven fabric of strips (1), a knitted fabric of strips or a fleece of strips.

7. The deep-drawable foil according to one or several of the preceding claims,
**characterized in that**
the strips (3) and/or the synthetic material layer (4) is made of a thermoplastic synthetic material.

8. The deep-drawable foil according to claims 1 or 3 to 7,
**characterized in that**
the at least one additive is formed as an absorber, e.g. carbon black, colour particles.

9. A method for producing a deep-drawable foil, wherein strips (3) of synthetic material are stretched, the stretched strips (3) are joined into a woven fabric, a knitted fabric or a fleece to form a reinforcement layer, a synthetic material layer (4) is applied on at least one side of the reinforcement layer, wherein, in order to achieve an integral bonding between the synthetic material layer (4) and the reinforcement layer, the synthetic material layer (4) and/or the reinforcement layer are heated, wherein the temperature is chosen so that the strips (3) of the reinforcement layer are melted only at their surface, wherein the synthetic material layer and/or the strips of the reinforcement layer comprise at least one additive by way of which the strips and/or the synthetic material layer can be heated up to different temperatures when subjected to a radiation-induced heating by a radiation source.

10. The method according to claim 9,
**characterized in that**
the strips (3) are produced in several layers or in one layer.

11. The method according to claim 10,
**characterized in that**
the outer layer (3b) of the strips (3) of the reinforcement layer has a melting point that is similar or equal to that of the synthetic material layer (4).

12. The method according to claim 10 or 11,
**characterized in that**
in the case of a multi-layered strip (3) at least the inner layer (3a) is stretched.

13. A formed part produced in a deep-drawing process,
**characterized by**
a deep-drawable foil according to one or several of the claims 1 to 8.

14. The formed part according to claim 13,
**characterized in that**
the reinforcement layer is disposed locally in the places of the formed part subjected to the greatest stress.

## Revendications

1. Feuille adaptée à l'emboutissage, comprenant une seule couche de renfort avec des bandelettes (3) étirées fabriquées en matière synthétique, où la couche de renfort est revêtue sur au moins un côté d'une couche en matière synthétique (4), où la couche en matière synthétique (4) est jointe par liaison de matière avec la couche de renfort,
**caractérisée en ce que**
la couche en matière synthétique et/ou les bandelettes de la couche de renfort comportent au moins un additif par lequel les bandelettes et/ou la couche en matière synthétique peuvent être chauffées à différentes températures par un réchauffement induit par des rayonnements d'une source de rayonnement.

2. Feuille adaptée à l'emboutissage, comprenant une seule couche de renforcement avec des bandelettes (3) étirées fabriquées en matière synthétique, où la couche de renfort est revêtue sur au moins un côté d'une couche en matière synthétique (4), où la couche en matière synthétique (4) est jointe par liaison de matière avec la couche de renfort,
**caractérisée en ce que**
la couche de renfort formée de bandelettes comporte un revêtement réfléchissant.

3. Feuille adaptée à l'emboutissage selon la revendication 1 ou 2,
**caractérisée en ce que**
les bandelettes (3) de la couche de renfort sont formées en plusieurs couches, en particulier en deux couches.

4. Feuille adaptée à l'emboutissage selon la revendication 3,
**caractérisée en ce qu'**
au moins la couche intérieure (3a) de la bandelette (3) constituée de plusieurs couches est étirée.

5. Feuille adaptée à l'emboutissage selon la revendication 3 ou 4,
**caractérisée en ce que**
le matériau de la couche intérieure (3a) des bandelettes (3) présente un point de fusion supérieur à celui de l'au moins une couche extérieure (3b).

6. Feuille adaptée à l'emboutissage selon une ou plusieurs des revendications précédentes,
**caractérisée en ce que**
la couche de renfort est réalisée sous forme de tissu de bandelettes (1), de maillage de bandelettes ou de non-tissé de bandelettes.

7. Feuille adaptée à l'emboutissage selon une ou plusieurs des revendications précédentes,
**caractérisée en ce que**
les bandelettes (3) et/ou la couche de renfort (4) est formée d'une matière synthétique thermoplastique.

8. Feuille adaptée à l'emboutissage selon les revendications 1 ou 3 à 7,
**caractérisée en ce que**
l'au moins un additif prend la forme d'un absorbeur, par exemple le noir de carbone, des particules de couleur.

9. Procédé pour la production d'une feuille adaptée à l'emboutissage, où des bandelettes (3) en matière synthétique sont étirées, les bandelettes (3) étirées sont jointes en un tissu, un maillage ou un non-tissé pour former une couche de renfort, une couche de matière synthétique (4) est appliquée sur au moins un côté de la couche de renfort, où, afin de former une liaison de matière entre la couche de matière synthétique (4) et la couche de renfort, la couche de matière synthétique (4) et/ou la couche de renfort sont chauffées, où la température est choisie de telle manière que les bandelettes (3) de la couche de renfort ne sont fondues qu'à leur surface, où la couche de matière synthétique et/ou les bandelettes de la couche de renfort comportent au moins un additif par lequel les bandelettes et/ou la couche en matière synthétique peuvent être chauffées à différentes températures par un réchauffement induit par des rayonnements d'une source de rayonnement.

10. Procédé selon la revendication 9,
**caractérisé en ce que**
les bandelettes (3) sont fabriquées avec une couche ou avec plusieurs couches.

11. Procédé selon la revendication 10,
**caractérisé en ce que**
la couche extérieure (3b) des bandelettes (3) de la couche de renfort présente un point de fusion qui est similaire ou égal à celui de la couche en matière synthétique (4).

12. Procédé selon la revendication 10 ou 11,
**caractérisé en ce que**
dans le cas d'une bandelette multicouches (3) au moins la couche intérieure (3a) est étirée.

13. Pièce façonnée produite lors d'un procédé d'emboutissage,
**caractérisée par**
une feuille adaptée à l'emboutissage selon une ou plusieurs des revendications 1 à 8.

14. Pièce façonnée selon la revendication 13,
**caractérisée en ce que**
la couche de renfort est disposée localement dans la pièce façonnée aux endroits subissant les plus grandes contraintes.
